# EUROPEAN PATENT APPLICATION

(11) **EP 3 617 102 A1**
(43) Date of publication of application: **04.03.2020**
(21) Application number: 18020447.1
(22) Date of filing: 13.09.2018
(51) Int. Cl.: B65G 17/12, B65G 17/36, A01F 12/56

(54) **SYSTEM FOR ATTENUATING THE IMPACT ON SEEDS IN BUCKET BELT ELEVATORS**

(30) Priority: 31.08.2018 RO 201800627
(71) Applicant: Institutul National de Cercetare Dezvoltare pentru Masini si Instalatii destinate Agriculturii si Industriei Alimentare-INMA, Bucuresti (RO)
(72) Inventor: Gageanu, Paul, Bucuresti (RO); Ganea-Christu, Ioan, Bucuresti (RO); Gageanu, Iuliana, Bucuresti (RO)
(74) Representative: Strenc, Alexandru Cristian

(57) **Abstract**

The invention refers to a system for attenuating the impact on seeds upon the contact with the metallic components of bucket belt elevators, during loading, transport and unloading.

The system for attenuating the impact on seeds in bucket belt elevators, composed of the main classic subassemblies: elevator head **a**, elevator foot **b** with open / close flaps **2** for cleaning, belt with buckets **c**, tubing **d** and actuation system, according to the invention, consists in introducing rubber bushings **6**, fixed on the belt **3** transporting buckets **4** using bolts **5**, thus creating a space "**x**", enough so that seeds are not attached and crushed between the buckets and the belt when turning on the action drum **7**, and the inferior drum **T** is of grille type composed of two conoids 11, two discs 10 mounted on the axle 12 and equidistant pallets 9 allowing seeds caught between the belt and the drum to be evacuated through the elongated orifices of the discs, without being traumatized.

## Description

### Technical Field

The invention refers to a system for attenuating the impact on seeds by attenuating hits upon contact with metallic components, destined for bucket belts, durind loading, transport and unloading.

As a factor of primary importance in increasing agricultural production, the seed enjoys a great deal of attention, many disciplines, institutions and economic agents competing to obtain material for sowing or for consumption as valuable as possible.

### Background Art

Normally, a bucket elevator consists of the following main components: elevator head, elevator foot, bucket belt, tubing and actuation system. Traditional elevators cannot avoid seed deterioration. High movement speeds of buckets do not allow their filling in 1/15 seconds, remaining a single option, respectively feeding seeds at a speed of 3 m/s and even above it.

The solution consists in decreasing the bucket's movement speed to 0.7 m/s, simultaneously solving the problem of unloading, namely excluding dropping seeds on the ground. The future of seed selection and science does not belong to traumatized, large, heavy seeds but to integral seeds. It was inferred that the broken seeds do not emerge in the field, and in the case of weak, traumatized seeds, even if they germinated in field conditions, remained behind in development and gave poor yields.

In the current state of technique, a series of technical versions from companies producing bucket elevators are known for the vertical transport of seeds: Buhler Germany, GOLFETTO, OCRIM, (Italy), AYBAKAR (Turkey), CARTER-DAY (USA), EXACTOSIZER, HEID-CIMBRIA (Austria), AEROMEH din LUGANSK (Ukraine), etc. Each of them took into consideration the manner how seeds behave during the impact with the elevator's components during feeding, transportation and seed evacuation, the main solutions employed being directed towards decreasing the impact on seeds when hitting the hood of the elevator head, by mounting a rubber protection.

The disadvantages of constructive solutions adopted by these companies consist in:
- They decrease the impact between seeds and the hood, but this only happens at the outlet;
- Seeds caught between the buckets and the belts are not protected;
- Seeds caught between the belt and the inferior drum are not protected.

### Summary of invention

The technical problem solved by this invention consists in minimizing the destructive effects caused to seeds during the transportation process in belt bucket elevators.

The invention claimed uses in this purpose, as main original element of the solution, mounting elements for the buckets that create an adequate space between them and the belt, so that seeds that would be caught between the belt when turning on the action drum to be able to flow without being crushed between them.

The second original element of the solution consists in the fact that in order to avoid seeds being crushed between the belt and the inferior drum, the drum is of grille type, the seeds passing between the pallets and being evacuated through slots specially provided for this purpose, from where they will be taken and transported to the desired altitude, without being harmed.

The system for attenuating the impact on seeds in belt bucket elevators, besides the classic subassemblies known: elevator head, elevator foot, belt with buckets, tubbing and actuation system, it has as new elements the protection of seeds by mounting rubber bushings between the belt and the buckets, and the inferior drum is of grille type.

By applying the invention, the following advantages are obtained:
- The quantity of seeds harmed during feeding is substantially reduced, by reducing the movement speed of the bucket belt and implicitly by reducing the impact between seeds and buckets;
- the quantity of seeds harmed during unloading is reduced by plating the hood from the elevator head with soft rubber;
- the danger of crushing seeds between the bucket and the belt during unloading is eliminated by providing a system for mounting the buckets so that the distance "x" between the cup and the belt is bigger than the size of any seed transported;
- the danger of crushing seeds between the belt and the inferior drum from the elevator foot is eliminated by providing a grille type drum.

### Brief description of drawings

An example of embodiment for the invention is further presented, with reference to figures 1, 2, 3 and 4 which represent:
- Fig. 1 - System for attenuating the impact on seeds in bucket belt elevators - general overview diagram
- Fig. 2 - System for attenuating the impact on seeds in bucket belt elevators - Bucket belt fitted with seed protection elements;
- Fig. 3 - System for attenuating the impact on seeds in bucket belt elevators - The hood of the elevating head with impact reduction during unloading;
- Fig. 4 - System for attenuating the impact on seeds in bucket belt elevators - elevator foot with grille type drum.

### Description of embodiments

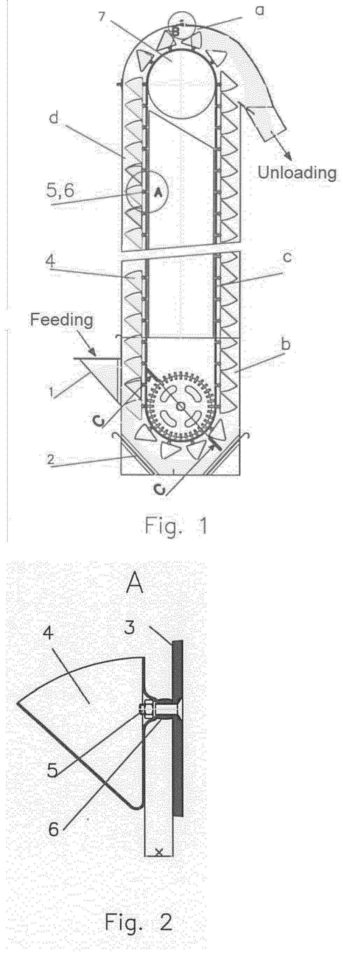

In figure 2 is presented the system proposed for mounting the buckets on the belt so that seeds cannot be caught between the bucket and the belt. The bucket **4** is attached on the belt **3** using a screw and nut **5** and the rubber bushings **6**. The rubber bushings **6** will be dimensioned depending on the seeds that need to be transported so that its height "x" is bigger than any size of the seeds.

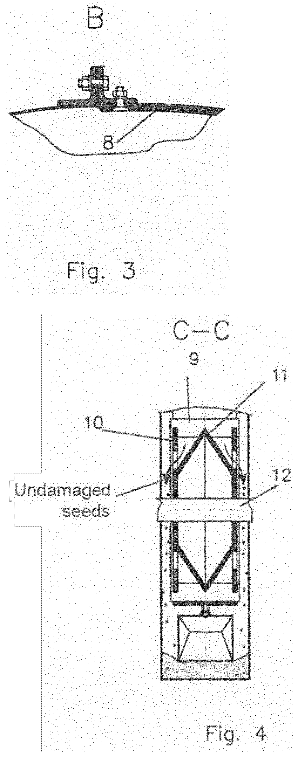

In figure 3 is presented the hood of the elevator, plated with soft rubber **8** to attenuate the impact at the contact of seeds with the hood after throwing from the buckets when unloading.

In figure 4 is presented the foot of the elevator with the grille type stretching drum made of two conoids **11**, which are welded at the small base on discs **10**. On the big base of the conoids and on the exterior contour of discs are welded the pallets **9** at equal distances. Discs **10** are provided with **4** elongated holes in the space between the small base of the conoids and the pallets, through which are eliminated the seeds that have passed through the spaces between the pallets (grille).

In order to have a degree as small as possible of traumatized seeds, the feeding of the elevator should only be done in counterflow, thus eliminating the excavation effect when feeding in front flow, when many traumas, even breakages, can be produced to seeds.

Also, in order to reduce the number of traumatisms during the transportation of seeds destined to be used as seeding material, is necessary for the unloading to be of the gravitational type, and the linear or peripheral speed of the bucket belt to be maximum 0.7 m/s.

By fulfilling these two conditions, seeds in the feeding funnel **1**, which is integral part of the elevator foot **b**, are taken by buckets **4** and transported by the tubing **d** at the desired height, where they are evacuated through the evacuation funnel, which is an integral part of the elevator head **a**.

In order to prevent the crushing of seeds that can be caught between the buckets and the belt when the buckets turn on the action drum **7**, a rubber bushing **6** is mounted between the bucket and belt, whose height at mounting "**x**" is higher than the thickness of seeds that will be transported. In the moment when the loaded buckets reach the level of the action drum, the seeds are not caught between the buckets and the belt, but slide around the bushings and fall in the buckets situated at the inferior part or reach the elevator foot, from where they are taken to be transported.

Seeds can also fall between the belt and the inferior drum where they can be crushed, loosing the capacity to germinate. This phenomenon can be eliminated by using a grille type drum. This consists of two conoids **11**, welded face to face on the big diameter. On the small diameter are welded two discs **10**, one with the exterior diameter equal with the big diameter of the conoids, and the other one with the exterior diameter equal to the small diameter. On the exterior diameter of the conoids and of the discs are provided equidistant pockets where the pallets **9** are welded, giving the exterior diameter of the drum. Both discs have **4** elongated holes. All this welded ensemble is mounted on an axle **12**, and together form the inferior drum of the elevator. Seeds reaching between the belt and the drum pass through the pallets **9**, and get between discs **10** and conoids **11**. When they reach the elongated holes, they are evacuated and get to the base of the elevator foot **b**, from where they are taken by the buckets and are transported to the desired height.

## Claims

1. System for attenuating the impact on seeds in gravitational bucket belt elevators, composed of the main known subassemblies: elevator head a, feeding funnel **1**, elevator foot **b** with open / close flaps **2** for cleaning, belt with buckets **c**, tubing **d** and actuation system at a maximum peripheral speed of maximum 0.7 m/s, the feeding being done in counterflow, the elevator hood being plated with low hardness rubber **8**, **characterized in that**, when mounting the buckets **c** on the belt, rubber bushings **6** are provided, fixed on the belt **3** that transports the buckets **4** using bolts **5**, thus creating a space "**x**" enough so that seeds are not attached and crushed between the bucket and the belt when turning on the action drum **7**, and the inferior drum **T** is of grille type with equidistant pallets for evacuating seeds undamaged.

2. System for attenuating the impact on seeds in bucket belt elevators, according to claim **1**, **characterized in that**, the inferior drum **T** of grille type is composed of two conoids **11**, two discs **10** mounted on axle **12** and equidistant pallets **9** allowing seeds caught between the belt and the drum to be evacuated through the elongated orifices of the discs, without being traumatized.
